# EUROPÄISCHE PATENTSCHRIFT

(11) **EP 1 704 351 B1**
(45) Veröffentlichungstag und Bekanntmachung des Hinweises auf die Patenterteilung: **04.02.2009**
(21) Anmeldenummer: 04804248.5
(22) Anmeldetag: 23.12.2004
(51) Int. Cl.: F16H 63/16

(54) **SCHALTVORRICHTUNG AN EINEM MEHRGÄNGIGEN SCHALTGETRIEBE**
SWITCHING DEVICE IN A MULTI-SPEED GEARBOX
DISPOSITIF DE COMMUTATION DANS UNE BOITE DE VITESSES A VITESSES MULTIPLES

(30) Priorität: 13.01.2004 DE 102004001741
(43) Veröffentlichungstag der Anmeldung: 27.09.2006
(73) Patentinhaber: ZF Friedrichshafen AG, 88038 Friedrichshafen (DE)
(72) Erfinder: KÖNIG, Jan-Peter, 14550 Gross-Kreutz (DE); DRABEK, Michael, 14778 Schenkenberg (DE)
(86) Internationale Anmeldenummer: PCT/EP2004/014654
(87) Internationale Veröffentlichungsnummer: WO 2005/068880

(56) Entgegenhaltungen:
- WO-A-20/04046588
- DE-A1- 1 480 495
- DE-C- 585 837
- GB-A- 1 238 912
- US-A- 1 889 909
- US-A- 2 485 151
- US-A- 3 893 347
- US-A- 4 335 623

## Beschreibung

Die Erfindung betrifft eine Schaltvorrichtung an einem mehrgängigen Schaltgetriebe gemäß dem Oberbegriff des Patentanspruchs 1. Eine solche Schaltvorrichtung ist aus der GB-A-1 238 912 bekannt.

In der nicht vorveröffentlichten DE 102 31 547 A1 ist eine Schaltvorrichtung für ein Schaltgetriebe beschrieben, bei dem mindestens eines seiner Schaltpakete zwei nicht aufeinander folgenden Übersetzungsstufen des Getriebes zugeordnet ist. Diese Schaltvorrichtung ist zudem mit einer mechanischen Konvertierungsvorrichtung ausgestattet, mittels der eine Handschaltvorrichtung mit einer H-Schalt-kulisse ein solches Getriebe schalten kann.

Bei dieser Schaltvorrichtung ist der Getriebeschalthebel in der H-Schaltkulisse geführt und mit zwei Getriebeschaltwellen derart gekoppelt, dass eine Bewegung des Schalthebels in einer Schaltgasse zu einer Verschwenkung der ersten Schaltwelle um deren Längsachse führt. Darüber hinaus ist auf der ersten Schaltwelle ein erstes Zahnrad befestigt, das mit einem zweiten Zahnrad auf der zweiten Schaltwelle kämmt. Bei einer Drehung der ersten Schaltwelle dreht sich die zweite Schaltwelle daher gegenläufig in die andere Richtung. Zur Anwahl einer Schaltgasse durch den Getriebeschalthebel werden die beiden Schaltwellen zwangsgekoppelt parallel zu ihren Längsachsen verschoben.

Außerdem verfügen diese beiden Schaltwellen über Schaltfinger, die in Abhängigkeit von dem eingelegten Getriebegang in gangindividuelle Vertiefungen von Schaltstangen greifen, welche mit Schaltgabeln verbunden sind. Diese Schaltgabeln stehen ihrerseits mit den Schiebemuffen der Schaltpakete in Verbindung, die bei einer Schaltbetätigung zur drehfesten Verbindung von Losrädern mit einer Getriebewelle axial auf der jeweiligen Getriebewelle verschoben werden.

Darüber hinaus beschreibt die ebenfalls nicht vorveröffentlichte DE 102 53 471 A1 eine Einstangenschaltung für beliebig setzbare Gangpositionen eines Schaltgetriebes, bei der ein fahrerseitiger Schalt- und Wählhebel mit einer axial verschiebbaren und um ihre Längsachse verschwenkbaren Schaltfingerweite gekoppelt ist. Diese Schaltfingerwelle verfügt für jeden Getriebegang über Schaltfinger zum Einlegen und Auslegen von Getriebegängen, die in Aussparungen von jeweils zwei Getriebegängen zugeordneten Schaltrah men eingreifen.

Zur Anwahl eines Getriebeganges wird die Schaltfingerwelle axial verschoben und zum Einlegen eines Ganges um ihre Längsachse verdreht, so dass gangbezogen jeweils ein Schaltfinger in eine Aussparung des angewählten Schaltrahmens eingreift und diesen im wesentlichen senkrecht zur Längsachse der Schaltfingerwelle verschiebt. Mit den Schaltrahmen verbundene Schaltstangen wirken jeweils auf Schaltgabeln ein, mit denen Schiebemuffen zum drehfesten Verbinden von Getriebeloszahnrädern mit deren Radsatzwelle auf dieser axial verschiebbar sind.

Zudem sind an den Schaltrahmen radial zur Schaltfingerwelle weisende Sperrnocken ausgebildet, die ein unzulässiges Einfahren von Schaltfingern in den jeweiligen Schaltrahmen verhindern können.

Wenngleich diese nicht vorveröffentlichten Schaltvorrichtungen mit dem Vorteil verbunden sind, dass beispielsweise die Getriebestruktur eines Doppelkupplungsgetriebes mit der beschriebenen Gang- und Schaltpaketanordnung unter Beibehaltung fast aller seiner Komponenten auch als Handschaltgetriebe nutzbar sowie mit einer H-Schaltkulisse schaltbar ist, so ist der Aufbau dieser Schaltvorrichtungen jedoch mechanisch vergleichsweise aufwendig.

Vor diesem Hintergrund ist daher es die Aufgabe an die Erfindung, eine Schaltvorrichtung für Schaltgetriebe vorzustellen, die einen mechanisch einfacheren Aufbau aufweist, deren Betätigung leichter automatisierbar ist, und die sowohl für Doppelkupplungsgetriebe als auch für Schaltgetriebe mit nur einer Anfahr- und Schaltkupplung nutzbar ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Gemäß der Erfindung sind alle Gänge nur mit einer Umdrehung einer Schaltwelle erreichbar und schaltbar. Bei einem derartigen Aufbau erfolgt die Ganganwahl zwar sequentiell, Gangsprünge beispielsweise vom dritten Gang zum fünften Gang sind bei schnell arbeitenden Stellmitteln jedoch rasch durchführbar.

In diesem Zusammenhang wird darauf hingewiesen, dass dann, wenn mit einem der Schaltrahmen getriebespezifisch nur ein Gang eingelegt werden kann, an der Schalt- und Wählwelle zum Schalten dieses Ganges nur ein Wählfinger und an dem jeweiligen Schaltrahmen nur ein Mittel zum Einlegen sowie ein Mittel zum Herausnehmen dieses Ganges ausgebildet sein braucht. Bei Schaltrahmen, mit denen alternativ zueinander zwei Gänge einlegbar und herausnehmbar sind, ist dagegen für jeden Gang eines der vorgenannten Paare der genannten Mittel ausgebildet. Zudem verfügt die Schalt- und Wählwelle zur Betätigung eines solchen Schaltrahmens über zwei benachbarte Schaltfinger.

Gemäß der Erfindung sind diese Mittel an den Schaltrahmen als Ein- und Auslegenocken ausgebildet, wobei sinnvollerweise je Schaltrahmen wenigstens ein Einlegenocken und wenigstens ein Auslegenocken vorgesehen ist.

In Weiterbildung der Schaltrahmen wird es als vorteilhaft erachtet, dass die Einlege- und Auslegenocken im wesentlichen achsparallel zur Längsachse der Schalt- und Wählwelle an den Schaltrahmen ausgebildet sind.

Den Einlegenocken und den Auslegenocken der Schaltrahmen sind jeweils axial und/oder radial zueinander beabstandete Wirkkreise von Schaltfingern zugeordnet. So verfügt ein zum Einlegen und Herausnehmen von zwei Gängen dienender Schaltrahmen pro Gang über ein Paar Nocken, welche von den beiden diesem Schaltrahmen zugeordneten Schaltfingern mit einer Verschiebekraft beaufschlagbar sind. Dabei dienen die Nocken in Abhängigkeit von der Drehrichtung der Schalt- und Wählwelle entweder zum Einlegen oder zum Auslegen eines Ganges. Die Wirk- oder Betätigungsflächen der jeweiligen Nockenpaare sind so ausgebildet und ausgerichtet, dass diese auf den Wirkkreisen der zugeordneten Schaltfinger liegen. Die Wirkkreise definieren damit die Länge der jeweiligen Schaltfinger und Nocken.

Daraus kann sich ergeben, dass die Nockenpaare eines Schaltrahmens einen unterschiedlichen radialen Abstand zur Schaltwelle haben. Der radiale Abstand des äußeren Nockenpaares ist dabei vorzugsweise so gewählt, dass der kürzere Schaltfinger in seinem Wirkkreis nicht behindert wird.

Selbstverständlich kann ein Nockenpaar axial derart angeordnet sein, dass beide Schaltfinger den gleichen Wirkkreis und damit die gleiche Schaltfingerlänge haben. Dazu müssten jedoch ohne Verstoß gegen das erfindungsgemäße Grundprinzip die dem Schaltrahmen zugeordneten Schaltfinger in axial richtiger Reihenfolge auf der Schalt- und Wählwelle angeordnet sein.

Um den Schaltfingern der Schalt- und Wählwelle einen guten mechanischen Kontakt zu den jeweiligen Schaltrahmen gewährleisten zu können, verfügen die Einlege- und Auslegenocken in Weiterbildung der Erfindung über im wesentlichen zueinander weisende und radial ausgerichtete Betätigungsflächen, an denen die Schaltfinger angreifen können. Eine Schaltfingerdrehbewegung in deren Wirkkreisebene führt sodann zu einer Drehbewegung des Schaltrahmens.

Außerdem sind an den Einlege- und Auslegenocken radiale Freigangkonturen ausgebildet, die eine freie Schwenkbewegung ermöglichen.

Des weiteren sind die an den Einlege- und Auslegenocken ausgebildeten Betätigungsflächen so geformt, dass diese die Beweglichkeit eines nicht im Eingriff befindlichen Schaltfingers für den gleichen Schaltrahmen nicht beeinträchtigen.

Auch kann vorgesehen sein, dass am gleichen Schaltrahmen der Abstand zwischen den Nocken eines Nockenpaares unterschiedlich zu dem Abstand der Nocken des anderen Nockenpaares ist.

Darüber hinaus wird es als sinnvoll angesehen, wenn am gleichen Schaltrahmen die Abstandsmittellinie zwischen einem Nockenpaar symmetrisch oder seitlich versetzt zu der Abstandsmittellinie eines anderen Nockenpaares orientiert ist.

Die Außengeometrie derartiger Schaltrahmen ist beispielsweise im wesentlichen oval, wobei die Zug-Schub-Mittel einander gegenüberliegend im Bereich des größten Durchmessers eines solchen Schaltrahmens ausgebildet sind.

In einer weiteren sinnvollen Ausgestaltung der Erfindung können die an den Schaltrahmen ausgebildeten Schub-Zug-Mittel aus einem stangenförmigen Material oder aus einem Blechteil hergestellt sein, welche entweder integraler Bestandteil eines jeden Schaltrahmens sind oder mit diesem in geeigneter Weise kraft- und/oder formschlüssig verbunden sind.

Bei einer in bezug auf die Lagerung und den Antrieb der Schalt- und Wählwelle ersten Ausgestaltungsform ist vorgesehen, dass mit der erfindungsgemäßen Schaltvorrichtung die Getriebegänge sequentiell nacheinander anwählbar und schaltbar sind. Dies kann bei einem Siebenganggetriebe die Schaltpositionen RG-N-G1-G2-G3-G4-G5-G6-G7 umfassen. Sofern eine schnelle Stellvorrichtung für die Schalt- und Wählwelle genutzt wird, können auch ohne langes Warten durch einen Fahrzeugführer Getriebegänge übersprungen werden. Beispielhaft kann also vom ersten Gang G1 in den dritten Gang G3 oder vom vierten Gang G4 in den zweiten Gang G2 geschaltet werden.

Zum Antrieb der Schalt- und Wählwelle wird bevorzugt ein elektrischer Stellmotor genutzt, mit dem diese um ihre Längsachse drehbar ist.

Sofern die Schaltfolge beim Überspringen von Gangpositionen durch den einen Stellmotor nicht schnell genug erfolgen kann, besteht gemäß einer anderen Ausgestaltung der Erfindung die Möglichkeit, dass die Schalt- und Wählwelle mittels einer zweiten Stellvorrichtung axial derart bewegbar ist, dass die Schaltfinger aus einer Eingriffsposition oder in eine Eingriffsposition zu den Nocken verschiebbar sind. In der Nichteingriffposition kann die Schalt- und Wählwelle durch eine schnelle Rotation um ihre Längsachse über einige Winkelgrade mehrere Gangpositionen überspringen, um dann anschließend durch erneutes Betätigen der zweiten Stellvorrichtung axial zurück in eine Eingriffsposition zum Einlegen des neuen Gangs gebracht werden.

Eine solche zweite Stellvorrichtung umfasst im einfachsten Fall einen axial auf die Schalt- und Wählwelle einwirkenden Elektromagneten sowie eine in Gegenrichtung wirkende Rückstellfeder. Die Stellvorrichtung kann aber auch als Stellmotor mit oder ohne Stellgetriebe ausgebildet sein.

Zur gezielten Anwahl und Schaltung aller Getriebegänge ist bevorzugt vorgesehen, dass die Schalt- und Wählwelle mit ihren Schaltfingern derartig ausgebildet ist und so mit den Nocken an den Schaltrahmen zusammenwirkt, dass durch Drehung derselben um weniger als 360°, vorzugsweise um weniger als 270°, alle Schaltpositionen des Getriebes erreichbar und die zugehörigen Gänge RG, G1, G2, G3, G4, G5, G6, G7 ein- oder auslegbar sind.

Eine weitere Variante der erfindungsgemäßen Schaltvorrichtung sieht vor, dass die Schalt- und Wählwelle mittels einer geeigneten Vorrichtung in Abhängigkeit von deren Drehwinkel und deren Drehrichtung konstant oder partiell axial verschiebbar ist. Eine solche Vorrichtung kann ein Spindeltrieb sein, der beispielsweise von einem Elektromotor antreibbar ist. Damit ist es möglich, dass Schaltfinger durch die Schaltrahmen axial hindurchtauchen und so unterschiedliche Schaltrahmen erreichen können. Bei einer Drehung der Schalt- und Wählwelle um mehr als 360° sind daher mit einem Schaltfinger oder Schaltfingerpaar an verschiedenen Schaltrahmen unterschiedliche Getriebegänge schaltbar.

Gemäß einer anderen Variante der erfindungsgemäßen Schaltvorrichtung ist vorgesehen, dass die Schalt- und Wählwelle aus mehreren Teilwellen besteht, die achsparallel, axial hintereinander oder koaxial zueinander angeordnet und gelagert sind. Zudem ist bei dieser Schaltvorrichtung zur Erhöhung der Geschwindigkeit bei der Gangwahl und des Gangeinlegens vorgesehen, dass jede der Teilwellen der Schalt- und Wählwelle von unterschiedlichen Stellvorrichtungen, wie beispielsweise Antriebsmotoren, antreibbar ist. Dadurch lässt sich mit der erfindungsgemäßen Schaltvorrichtung auch ein Doppelkupplungsgetriebe praktikabel schalten.

Die Vorteile einer erfindungsgemäß ausgebildeten Schaltvorrichtung liegen insbesondere darin, dass alle Getriebegänge bzw. Schaltpositionen eines Schaltgetriebes mit nur einer Anfahr- und Schaltkupplung oder eines Doppelkupplungsgetriebes mittels vorzugsweise nur einer kombiniert wirkenden Schalt- und Wählwelle bei konstruktiv geringem Aufwand anwählbar und schaltbar sind.

Insbesondere die Nutzung von nur einer rotatorisch wirkenden Stellvorrichtung für die Schalt- und Wählwelle trägt zur kostengünstigen Herstellung der genannten Schaltvorrichtung bei. Zudem kann durch die Nutzung nur einer Stellvorrichtung für die Schalt- und Wählwelle deren Betrieb sehr vorteilhaft automatisiert werden.

Darüber hinaus ist durch Variationen hinsichtlich der Schaltfingerposition an der Schalt- und Wählwelle sowie der Position und Ausbildung der Einlege- und Auslegenocken an den Schaltrahmen eine beliebige Anordnung der Gänge auf den Radsatzwellen des Getriebes möglich, so dass unabhängig von dem Schaltbild (z. B. H-Schaltbild) einer Handschaltvorrichtung die Synchronisations- und Koppelvorrichtungen des Getriebes den jeweiligen Getriebelosrädern beliebig zugeordnet werden können.

Schließlich kann es vorteilhaft sein, eine Verriegelungsvorrichtung in diese Schaltvorrichtung zu integrieren, mit deren Hilfe das gleichzeitige Einlegen von zwei Getriebegängen auf einer Radsatzwelle eines Doppelkupplungsgetriebes vorteilhaft vermieden wird. Diese Verriegelungsvorrichtung ist an den Schaltrahmen ausgebildet. Zumindest ist diese Verriegelungsvorrichtung mit der Schaltvorrichtung jedoch derart wirkverbunden, dass diese bei einer diesbezüglichen Betätigungsbewegung der Schaltrahmen beziehungsweise der Schalt- und Wählwelle sperrend beziehungsweise freigebend auf diese einwirkt.

Zur Verdeutlichung der Erfindung sowie zur Darstellung einiger ihrer Ausgestaltungsformen ist der Beschreibung eine Zeichnung beigefügt. In dieser zeigen
- Fig. 1: eine perspektivische Darstellung der Schalt- und Wählwelle zusammen mit den Schaltrahmen einer erfindungsgemäß ausgebildeten Schaltvorrichtung,
- Fig. 2: einen Schaltrahmen gemäß Fig. 1,
- Fig. 3: eine schematische Stirnseitenansicht von Einlege- und Auslegenocken an einem Schaltrahmen in bezug zur Schalt- und Wählwelle, sowie
- Fig. 4: eine Variante zur Darstellung gemäß Fig. 3.

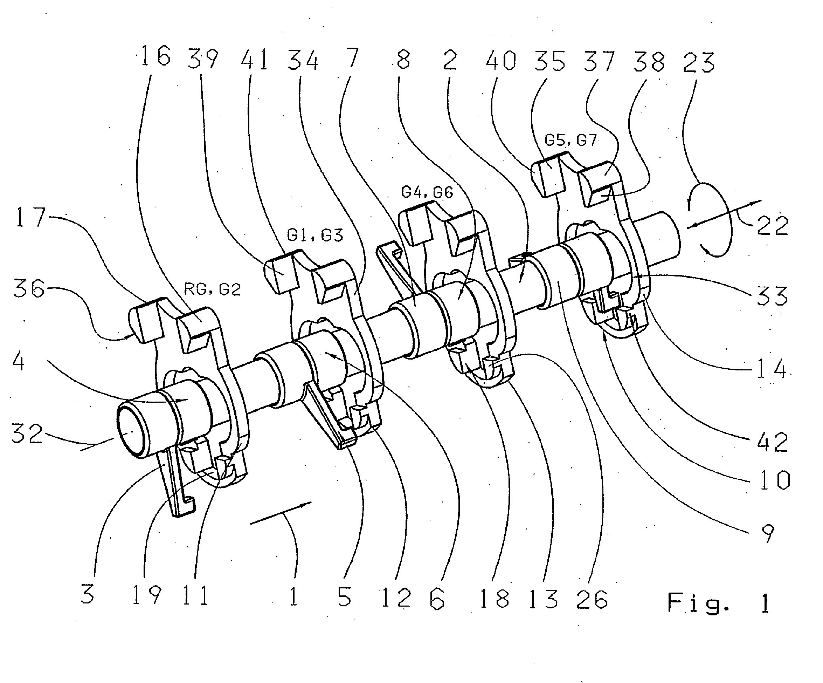

Demnach verdeutlicht Fig. 1 das Kernstück einer getriebeseitigen Schalt- und Wählvorrichtung 1, zu der eine vorzugsweise nur um ihre Längsachse 32 drehbar gelagerte Schalt- und Wählwelle 2 gehört. An dieser Schalt- und Wählwelle 2 sind Schaltfinger 3 bis 10 ausgebildet, die unter verschiedenen Umfangswinkeln radial von der Schalt- und Wählwelle 2 wegweisen.

Die Schalt- und Wählwelle 2 durchsetzt jeweils eine zentrale Öffnung 33 in sogenannten Schaltrahmen 11, 12, 13 und 14, die in diesem Ausführungsbeispiel eine angenähert ovale Umfangsgeometrie haben. Die Schaltfinger der Schalt- und Wählwelle 2 wirken mit diesen Schaltrahmen 11, 12, 13, 14 derart zusammen, dass mit deren Hilfe Getriebegänge eingelegt oder herausgenommen werden können.

Diese Getriebegänge sind im vorliegenden Beispiel die eines siebengängigen Kraftfahrzeugschaltgetriebes, wobei der Rückwärtsgang RG und der zweite Gang G2 dem Schaltrahmen 11, der erste Gang G1 und der dritte Gang G3 dem Schaltrahmen 12, die vierte Gang G4 und der sechste Gang G6 dem Schaltrahmen 13 sowie der fünfte Gang G5 und der siebte Gang G7 dem Schaltrahmen 14 zugeordnet sind. Die Neutralposition N des Getriebes entspricht dabei einer Nichtauslenkung aller Schaltrahmen.

Die Zuordnung der Getriebegänge zu den einzelnen Schaltrahmen ist an sich beliebig und hängt ebenso wie die Anzahl der Schaltfinger und die Anzahl der mit einem Schaltrahmen zu betätigenden Gänge von dem Aufbau des konkreten Getriebes ab. So kann diese Schaltvorrichtung 1 ohne größere Änderungen auch für ein anderes mehrgängiges, beispielsweise sechsgängiges Getriebe genutzt werden, bei dem dann mit einem der Schaltrahmen nur ein Getriebegang betätigt wird.

Zur konkreten Durchführung einer Schaltbewegung der Schaltrahmen 11, 12, 13, 14 in die eine oder in die andere Betätigungsrichtung ist die Schalt- und Wählwelle 2 um ihre Längsachse 32 von einer Antriebsvorrichtung verdrehbar, die hier zur besseren Übersichtlichkeit nur mit dem Rotationspfeil 23 angedeutet ist. Eine solche Antriebsvorrichtung 23 ist beispielsweise ein elektrischer Schrittmotor, der auf der Grundlage von Sensorinformationen hinsichtlich des Vorliegens einer Übersetzungsänderungsanforderung von einem Steuergerät mit Betätigungsbefehlen ansteuerbar ist.

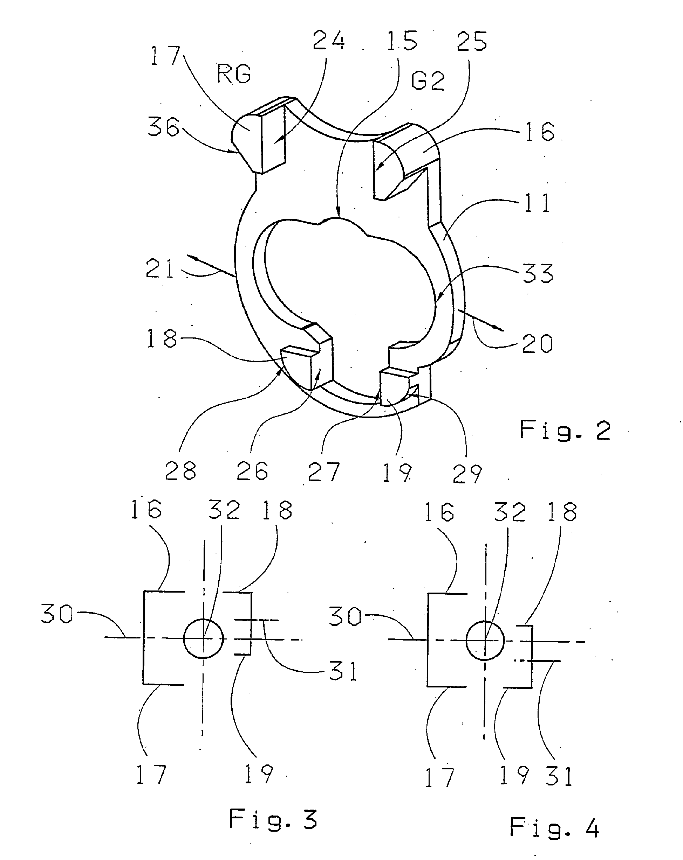

Wie Fig. 2 in der perspektivischen Detailansicht des beispielhaft herausgegriffenen Schaltrahmens 11 verdeutlicht, besteht dieser vorzugsweise aus einem umgeformten Blechteil oder einem Metallgusskörper mit der bereits erwähnten zentralen Öffnung 33, durch welche die Schalt- und Wählwelle 2 führbar ist.

Rechts- und linksseitig an diesem Schaltrahmen 11 sind hier nur angedeutet Schub-Zug-Elemente 20, 21 ausgebildet oder befestigt, die mit weiteren, hier nicht dargestellten Betätigungselementen zum axialen Verschieben der eingangs genannten Synchronisations- und Koppelmittel auf wenigstens einer Radsatzwelle des Getriebes zusammenwirken.

Darüber hinaus ist im oberen Bereich der Öffnung 33 ein Wellenfreigang 15 ausgebildet, in dem die Schalt- und Wählwelle 2 aufnehmbar ist.

Sehr wichtig am Aufbau dieses Schaltrahmens 11 für die Funktionsweise der Schaltvorrichtung 1 sind die axial von dem Schaltrahmen 11 abstehenden Betätigungsnocken, die hier paarweise als Betätigungsnocken 16, 17 und Betätigungsnocken 18, 19 im unteren bzw. oberen Bereich des Schaltrahmens 11 angeordnet sind.

Wie Fig. 2 deutlich zeigt, ist ein Nockenpaar 18, 19 axial kürzer als das andere Nockenpaar 16 und 17, so dass der auf der Schalt- und Wählwelle 2 axial vor dem kürzeren Schaltfinger 4 angeordnete längere Schaltfinger 3 bei einer Drehung der Schalt- und Wählwelle 2 problemlos an dem Nockenpaar 18, 19 vorbei bewegt werden kann.

An den Nocken 16, 17, 18, 19 sind auch Betätigungsflächen 24, 25, 26, 27 ausgebildet, an die jeweils der in Figur 1 gezeigte Schaltfinger 3, 4 zur Durchführung eines konkreten Übersetzungsänderungsvorgangs angreifen kann.

Zudem sei darauf hingewiesen, dass an den Nocken radiale Freigangkonturen 28, 29 ausgebildet sind, die eine freie Schwenkbewegung ermöglichen.

Auf die mit dieser Schaltvorrichtung 1 möglichen Wähl- und Schaltvorgänge wird mit Bezug auf die Figuren 1 bis 4 nachfolgend beispielhaft eingegangen.

Sofern mit Hilfe des Schaltrahmens 11 der Rückwärtsgang RG eingelegt werden soll, wird die Schalt- und Wählwelle 2 um ihre Längsachse 32 soweit gedreht, dass der Schaltfinger 3 an der Betätigungsfläche 24 des Nockens 17 zur Anlage gerät und anschließend den Schaltrahmen 11 nach links verschiebt.

Das Einlegen des siebten Ganges G7 am Schaltrahmen 14 erfolgt durch das Aufbringen einer Betätigungskraft des Schaltfingers 9 auf den Nocken 37, während derselbe zum Einlegen des fünften Gangs G5 auf die Betätigungsfläche 35 des Nockens 40 wirkt. Das Herausnehmen des fünften Ganges G5 erfolgt durch Aufbringen einer Betätigungskraft durch den kurzen Schaltfinger 10 auf den Nocken 42 des Schaltrahmens 14.

Eine Drehung der Schalt- und Wählwelle 2 nach dem Einlegen des siebten Ganges G7 am Schaltrahmen 14 wird begrenzt durch einen Kontakt des Schaltfingers 3 an der Fläche 36 des Nockens 17 des Schaltrahmens 11. Dementsprechend bildet auch die Fläche 38 am Schaltrahmen 14 einen Anschlag für den Schaltfinger 9, wenn der Rückwärtsgang RG geschaltet ist und die Schalt- und Wählwelle 2 weiter gedreht werden sollte.

Zum Herausnehmen des Rückwärtsganges RG ist an dem Schaltrahmen 11 der Nocken 16 vorgesehen, an dessen Betätigungsfläche 25 der Schaltfinger 4 anlegbar ist. Bei einer weiteren Drehung der Schalt- und Wählwelle 2 im Uhrzeigersinn über die Schaltstellung Neutral N hinaus, wird der zweite Gang G2 eingelegt. Der Schaltfinger 3 verlässt anschließend die Betätigungsfläche 25 des Nockens 16.

Während der zweite Gang G2 eingelegt bleibt, drückt der Schaltfinger 6 am Schaltrahmen 12 auf den in Fig. 1 durch den Schaltfinger 6 verdeckten Auslegenocken für den ersten Gang G1, so dass dieser ausgelegt wird. Bei einer weiteren Drehung der Schalt- und Wählwelle 2 im Uhrzeigersinn gelangt der Schaltfinger 6 dann nach überwinden der Neutralstellung an die Betätigungsfläche des Nockens 34, so dass der dritte Gang G3 eingelegt wird.

Gleichzeitig taucht der Schaltfinger 4 am Schaltrahmen 11 zwischen die Nocken 18, 19 ein, so dass nach dem Einlegen des dritten Gangs G3 der Schaltfinger 4 an der Betätigungsfläche 26 des Nockens 18 zur Betätigungsanlage gelangt.

Eine weitere Drehung der Schalt- und Wählwelle 2 im Uhrzeigersinn führt dazu, dass der zweite Gang G2 ausgelegt wird, währen der dritte Gang G3 weiterhin eingelegt bleibt. Dabei taucht der Schaltfinger 4 wieder aus dem zwischen den beiden Nocken 18, 19 des Schaltrahmens 11 gebildeten Zwischenraum aus.

Anschließend erfolgt das Einlegen des vierten Gangs G4 am Schaltrahmen 13, wobei der dritte Gang weiterhin eingelegt bleibt.

Bei einer Schaltreigenfolge in Richtung zum Rückwärtsgang RG wird die Schalt- und Wählwelle 2 in dem vorliegend gewählten Ausführungsbeispiel gegen den Uhrzeigersinn gedreht. Bei einem beispielhaften Fahrzustand im dritten Getriebegang G3 ist der vierte Gang G4 ebenfalls eingelegt.

Während des Auslegevorgangs für den vierten Gang G4 am Schaltrahmen 13 sowie dessen Beendigung in der Neutralstellung taucht der Schaltfinger 4 in dem Zwischenraum zwischen dem Nockenpaar 18, 19 ein, welches unter anderem durch getriebeseitige Erfordernisse und die entsprechend beispielhaft ausgeführte geometrische Auslegung bedingt ist.

Anschließend erfolgt ein Anlegen des Schaltfingers 4 an der Betätigungsfläche 27 des Nockens 19 am Schaltrahmen 11, so dass bei einer weiteren Drehung der Schalt- und Wählwelle 2 gegen den Uhrzeigersinn der zweite Gang G2 eingelegt wird, während der dritte Gang G3 eingelegt bleibt.

Bei einer Weiterdrehung der Welle 2 erfolgt das Auslegen des dritten Gangs durch Ausüben einer Betätigungskraft des Schaltfingers 5 auf die Betätigungsfläche 39 des Nockens 41 am Schaltrahmen 12.

Während der zweite Gang G2 weiterhin eingelegt bleibt, wird der Vorgang zum Einlegen des ersten Gangs G1 am Schaltrahmen 12 mittels des Schaltfingers 5 an der gleichen Betätigungsfläche 39 des Nockens 41 ausgeführt, wie beim Auslegen des dritten Gangs G3. So taucht der Schaltfinger 3 in den durch das Nockenpaar 16, 17 des Schaltrahmens 11 gebildeten Zwischenraum ein, während der Schaltfinger 5 aus denjenigen Zwischenraum heraustaucht, der zwischen dem ihm in dieser Schaltstellung zugeordneten Nockenpaar gebildet ist.

Gleichzeitig legt sich der Schaltfinger 3 an die Betätigungsfläche 24 des Nockens 17 am Schaltrahmen 11 an und beginnt mit dem Auslegen des zweiten Gangs G2 sowie dem Einlegen des Rückwärtsgangs RG. Dabei bleibt der erste Gang G1 eingelegt.

Durch die gerade beschriebenen Einlege- und Auslegebewegungen beispielsweise des Schaltrahmens 11 werden auch die mit diesem Schaltrahmen 11 verbundenen Schub-Zug-Mittel 20, 21 im wesentlichen axial hin- und herbewegt, so dass deren Ein- und Auslegebewegungen auf die eingangs genannten Synchronisations- und Koppelmittel des Getriebes übertragen werden. Das beschriebene Zusammenwirken der Schaltfinger 3, 4 und des Schaltrahmens 11 der Schaltbetätigung 1 funktioniert bei den anderen Schaltrahmen 12, 13, 14 und Schaltfingern ebenso.

Hinsichtlich der vorliegend nur beispielhaften Ausführung der Schaltvorrichtung 1 wird darauf hingewiesen, dass die Positionen der Nocken eines jeden Schaltrahmens sowie bei einem Vergleich der Schaltrahmen 11, 12, 13, 14 untereinander so angeordnet werden, dass bei einem bestimmten Drehwinkel der Schalt- und Wählwelle 2 jeweils nur ein Getriebegang eingelegt und/oder ausgelegt werden kann. Insofern sind die Getriebeschaltpositionen RG, N, G1, G2, G3, G4, G5, G6, G7 nur sequentiell, also nacheinander anwählbar. Es ist jedoch durch eine entsprechende Auslegung und Anordnung der Nocken an den Schaltrahmen sowie der Schaltfinger an der Schalt- und Wählwelle problemlos möglich, auch zwei oder mehrere Gänge gleichzeitig oder überlagert einzulegen bzw. herauszunehmen.

Wie Fig. 3 und Fig. 4 am Beispiel einer schematischen Stirnseitenansicht des Schaltrahmens 11 verdeutlichen, kann die Anordnung der Nocken 16 bis 19 an den Schaltrahmen weitgehend beliebig sein, wobei jedoch die Erfordernisse der Betätigungskinematik, etwa die Anzahl und Anordnung der Schaltfinger auf der Schalt- und Wählwelle, berücksichtigt werden müssen.

Eine solche Anordnung der Einlegenocken (beispielhaft 16, 17) zu den Auslegenocken (beispielhaft 18, 19) kann derart realisiert sein, dass die Abstandsmittellinie 31 zwischen den Auslegenocken 18, 19 gemäß Fig. 3 oberhalb der Abstandsmittellinie 30 und der Längsachse 32 der Schalt- und Wählwelle 2, oder gemäß Fig. 4 unterhalb der genannten Längsachse 32 und der Abstandsmittellinie 30 zwischen den Einlegenocken 16, 17 am Schaltrahmen 11 positioniert ist.

An sich kann davon ausgegangen werden, dass eine mit der Schalt- und Wählwelle 2 verbundene Stellvorrichtung schnell genug ist, um auch ein Überspringen von einem oder mehreren Gängen mit einer für den Fahrzeugnutzer ausreichend hohen Geschwindigkeit gewährleisten zu können. In einer zeichnerisch in Fig. 1 nur angedeuteten Weiterbildung der Erfindung kann zusätzlich zu dem Stellmotor 23 auch eine zweite Stellvorrichtung an der Schalt- und Wählwelle 2 angeordnet sein, mit dem letztere gemäß dem Richtungspfeil 22 axial hin- und her verschiebbar ist. Eine solche Stellvorrichtung kann beispielsweise ein von einem Elektromotor angetriebener Spindeltrieb oder ein axial wirkender Elektromagnet sein.

Durch diese Maßnahme wird erreicht, dass zum schnellen Überspringen von Gängen, also beispielsweise bei einem Gangsprung vom siebten Gang G7 in den dritten Gang G3, die Schalt- und Wählwelle 2 zunächst soweit um ihre Längsachse verdreht wird, bis der Schaltrahmen 14 hinsichtlich des siebten Gangs G7 in Neutralstellung gebracht ist. Dazu drückt der Schaltfinger 9 gegen die Betätigungsfläche 37 des Nockens 37, so dass der Schaltrahmen 14 nach links verschoben und in deren Folge der siebte Gang G7 herausgenommen wird. Anschließend wird die Schalt- und Wählwelle 2 gemäß dem Richtungspfeil 22 axial soweit verschoben, bis alle Schaltfinger aus den Eingriffsbereichen der Schaltrahmen 11, 12, 13, 14 entfernt sind.

Sodann erfolgt eine schnelle Verdrehung der Schaltwelle 2 um ihre Längsachse 32 gemäß dem Richtungspfeil 23 um einen Drehwinkel, der den Schaltfinger 5 in unmittelbare Nähe zu dem Einlegenocken 34 des Schaltrahmen 12 zum Einlegen des dritten Gangs G3 bringt. Anschließend wird die Schalt- und Wählwelle 2 durch inverse Betätigung des Stellmittels 22 oder durch die Rückstellkraft einer Rückstellfeder soweit axial zurückverschoben, dass die Schaltfinger erneut in den Eingriffsbereich der Schaltrahmen 11, 12, 13, 14 gelangen. Abschließend wird die Schalt- und Wählwelle 2 soweit um ihre Längsachse 32 verdreht, dass der Schaltfinger 5 an der Betätigungsfläche des Einlegenockens 34 zur Anlage gelangt und diesen zum Einlegen des dritten Gangs G3 nach rechts verschiebt.

Die vorliegende konstruktive Ausführungsform der Erfindung ist speziell an die Nutzung in einem Doppelkupplungsgetriebe angepasst, bei dem bis auf die Zeiträume bei Wählen und Schalten des Getriebes immer zwei Gänge geschaltet sind.

Wie die obigen Ausführungsbeispiele zeigen, ist mit der erfindungsgemäßen Schaltvorrichtung 1 ein Schaltgetriebe sequentiell oder auch überlagert sequentiell schaltbar, wobei die Schaltbarkeit benachbarter Getriebegänge in soweit überlagert erfolgen kann, dass die jeweils beteiligten Drehzahlsynchronisationen der jeweiligen Losräder an der zugehörigen Radsatzwelle noch nicht durchgeführt sind. Prinzipiell kann die Schaltvorrichtung aber so eingestellt werden, dass neben dem eingelegten aktiven Gang der jeweils vor- oder nachgeordnete Gang vorgewählt werden kann, wodurch diese Schaltvorrichtung auch für Doppelkupplungsgetriebe geeignet ist.

### Bezugszeichen

- 1: Schaltvorrichtung
- 2: Schalt- und Wählwelle
- 3: Schaltfinger
- 4: Schaltfinger
- 5: Schaltfinger
- 6: Schaltfinger
- 7: Schaltfinger
- 8: Schaltfinger
- 9: Schaltfinger
- 10: Schaltfinger
- 11: Schaltrahmen
- 12: Schaltrahmen
- 13: Schaltrahmen
- 14: Schaltrahmen
- 15: Wellenfreigangabschnitt
- 16: Nocken
- 17: Nocken
- 18: Nocken
- 19: Nocken
- 20: Schub-Zug-Element
- 21: Schub-Zug-Element
- 22: Antriebsvorrichtung, Verschiebungspfeil
- 23: Antriebsvorrichtung, Rotationspfeil
- 24: Betätigungsfläche
- 25: Betätigungsfläche
- 26: Betätigungsfläche
- 27: Betätigungsfläche
- 28: Freigangkontur
- 29: Freigangkontur
- 30: Abstandsmittellinie zwischen einem Nockenpaar
- 31: Abstandsmittellinie zwischen einem Nockenpaar
- 32: Längsachse der Schalt- und Wählwelle
- 33: Öffnung im Schaltrahmen
- 34: Nocken
- 35: Betätigungsfläche
- 36: Betätigungsfläche
- 37: Nocken
- 38: Betätigungsfläche
- 39: Betätigungsfläche
- 40: Nocken
- 41: Nocken
- 42: Nocken

- G1: Erster Gang
- G2: Zweiter Gang
- G3: Dritter Gang
- G4: Vierter Gang
- G5: Fünfter Gang
- G6: Sechster Gang
- G7: Siebter Gang
- RG: Rückwärtsgang
- N: Neutralposition

## Patentansprüche

1. Schaltvorrichtung (1) an einem mehrgängigen Schaltgetriebe, mit einer Schalt- und Wählwelle (2), auf welcher Schaltfinger (3 bis 10) angeordnet sind, mit einer Mehrzahl von Schaltrahmen (11 bis 14), deren jeweilige Öffnungen (33) von der Schalt- und Wählwelle (2) durchsetzt sind, mit wenigstens einem an jedem der Schaltrahmen (11 bis 14) ausgebildeten Schub-Zug-Element (20, 21), welches mit Koppelmitteln verbunden ist, mit dessen Hilfe Getriebelosräder mit einer Getriebewelle drehfest verbindbar sind, wobei allein durch eine Rotation der Schalt- und Wählwelle (2) um ihre Längsachse (32) jeder Getriebegang anwählbar und schaltbar ist, **dadurch gekennzeichnet, dass** mit mindestens einem Schaltrahmen (11 bis 14) alternativ zueinander zwei Gänge einlegbar und herausnehmbar sind, wobei diesem Schaltrahmen zwei auf der Schalt- und Wählwelle angeordnete Schaltfinger (3 und 4, 5 und 6, 7 und 8, 9 und 10) zugeordnet sind und der Schaltrahmen Nocken (16 bis 19, 34, 37, 40, 41, 42) aufweist, die bei einer Drehung der Schalt- und Wählwelle (2) im Zusammenwirken mit den Schaltfingern (3 bis 10) den Schaltrahmen (11 bis 14) quer zur Längsachse (32) dieser Schalt- und Wählwelle (2) verschieben, wobei an den Schaltrahmen (11 bis 14) für einen zu schaltenden Getriebegang (G1, G2, G3, G4, G5, G6, G7, RG) ein Einlegenocken zum Einlegen des Ganges und ein Auslegenocken zum Auslegen des Ganges ausgebildet ist und zwei den Einlegenocken (16, 17, 34) und den Auslegenocken (18, 19, 42) des Schaltrahmens axial und/oder radial zueinander beabstandete Wirkkreise zugeordnet sind, die mit den Drehebenen der diesbezüglichen Schaltfinger zusammenfallen.

2. Schaltvorrichtung nach Anspruch 1, **dadurch gekennzeichnet, dass** die Nocken (16, 17, 34; 18, 19; 42) im wesentlichen achsparallel zur Längsachse (32) der Schalt- und Wählwelle (2) an den Schaltrahmen (11 bis 14) ausgerichtet sind.

3. Schaltvorrichtung nach wenigstens einem der vorherigen Ansprüche, **dadurch gekennzeichnet, dass** die Nocken (16, 17, 34; 18, 19; 42) der Schaltrahmen (11 bis 14) paarbildend nebeneinander angeordnet sind.

4. Schaltvorrichtung nach wenigstens einem der vorherigen Ansprüche, **dadurch gekennzeichnet, dass** die Nocken (16, 17, 34; 18, 19, 42) im wesentlichen aufeinander zuweisende und radial ausgerichtete Betätigungsflächen (24, 25, 26, 27, 36, 38, 39) zum Anlegen der Schaltfinger (3 bis 10) aufweisen.

5. Schaltvorrichtung nach Anspruch 4, **dadurch gekennzeichnet, dass** die Betätigungsflächen (24, 25, 26, 27, 36, 38, 39) an den Nocken (16, 17, 34; 18, 19; 42) so ausgebildet sind, dass diese die Beweglichkeit eines im Eingriff befindlichen Schaltfingers (3 bis 10) des gleichen Schaltrahmens (11 bis 14) nicht beeinträchtigen.

6. Schaltvorrichtung nach wenigstens einem der vorherigen Ansprüche, **dadurch gekennzeichnet, dass** am gleichen Schaltrahmen (11 bis 14) der Abstand zwischen den Nocken (18, 19) des Auslegenockenpaares unterschiedlich ist zum Abstand der Nocken (16, 17) des Einlegenockenpaares.

7. Schaltvorrichtung nach wenigstens einem der vorherigen Ansprüche, **dadurch gekennzeichnet, dass** am gleichen Schaltrahmen (11 bis 14) die Abstandsmittellinie (31) zwischen zwei Auslegenocken (18, 19) symmetrisch oder seitlich versetzt zu der Abstandsmittellinie (30) zwischen zwei Einlegenocken (16, 17) orientiert ist.

8. Schaltvorrichtung nach wenigstens einem der vorherigen Ansprüche, **dadurch gekennzeichnet, dass** die an den Schaltrahmen (11 bis 14) angeordneten Schub-Zug-Mittel (20, 21) als Stangen köder Stanzblechteile ausgebildet sind.

9. Schaltvorrichtung nach wenigstens einem der vorherigen Ansprüche, **dadurch gekennzeichnet, dass** die Getriebegänge (RG, G1; G2, G3, G4, G5, G6, G7) sequentiell anwählbar und schaltbar sind.

10. Schaltvorrichtung nach wenigstens einem der vorherigen Ansprüche, **dadurch gekennzeichnet, dass** die Schalt- und Wählwelle (2) mittels eines Stellmittels (23) um ihre Längsachse (32) drehbar ist.

11. Schaltvorrichtung nach wenigstens einem der vorherigen Ansprüche, **dadurch gekennzeichnet, dass** die Schaft- und Wählwelle (2) mittels einer Antriebsvorrichtung (22) axial derart verschiebbar ist, dass die Schaltfinger (3 bis 10) aus einer Eingriffsposition oder in eine Eingriffsposition zu den Nocken (16, 17, 34; 18, 19; 42) verlagerbar sind.

12. Schaltvorrichtung nach wenigstens einem der vorherigen Ansprüche, **dadurch gekennzeichnet, dass** durch Drehung der Schalt- und Wählwelle (2) um weniger als 360°, vorzugsweise um weniger als 270°, alle Schaltpositionen des Getriebes erreichbar und die zugehörigen Gänge (RG, G1, G2, G3, G4, G5, G6, G7) ein- oder auslegbar sind.

13. Schaltvorrichtung nach wenigstens einem der vorherigen Ansprüche, **dadurch gekennzeichnet, dass** die Schalt- und Wählwelle (2) in Abhängigkeit von deren Drehwinkel und deren Drehrichtung konstant oder partiell axial derart verschiebbar ist, dass ein oder mehrere Schaltfinger (3 bis 10) in Betätigüngspösitiöheh von mehr als einem Schaltrahmen (11 bis 14) bringbar sind.

14. Schaltvorrichtung nach wenigstens einem der vorherigen Ansprüche, **dadurch gekennzeichnet, dass** die Schalt- und Wählwelle (2) aus mehrere Teilwellen besteht.

15. Schaltvorrichtung nach Anspruch 14, **dadurch gekennzeichnet, dass** die Teilwellen der Schalt- und Wählwelle (2) achsparallel, axial hintereinander oder koaxial zueinander angeordnet und gelagert sind.

16. Schaitvorrichtung nach Anspruch 14 oder 15, **dadurch gekennzeichnet, dass** die Teilwellen der Schalt- und Wählwelle (2) von unter schiedlichen Stellvorrichtungen antreibbar sind.

17. Schaltvorrichtung nach wenigstens einem der vorherigen Ansprüche, **dadurch gekennzeichnet, dass** eine Verriegelungsvorrichtung an den Schaltrahmen angeordnet ist, mit deren Hilfe das gleichzeitige Einlegen von zwei Getriebegängen auf einer Radsatzwelle eines Doppelkupplungsgetriebes vermeidbar ist.

## Claims

1. Shifting device (1) at a multi-speed manual transmission with a shift and a selector shaft (2) on which shift fingers (3 to 10) are located, with a multitude of shift frames (11 to 14) where the respective orifices (33) of the shift and selector shaft (2) are featuring at least one present coasting-traction element (20, 21) at each shift frame (11 to 14) and this element is connected by means of a coupling device through which the transmission's idle gears can be connected to a transmission shaft in a torque proof manner whereas solely through the rotation of the shift and selector shaft (2) around the longitudinal axis (32) each transmission gear can be selected and engaged, **characterized in that** at least with one shift frame (11 to 14) alternatively to one another, two gears can be engaged and disengaged while this shift frame has two shift fingers (3 and 4, 5 and 6, 7 and 8, 9 and 10) located on the shift and selector shaft and that the shift frame has cams (16 up to 19, 34, 37, 40, 41, 42) which, in the case of a rotation by the shift and selector shaft (2), in correlation with the shift fingers (3 to 10) offset the shift frame (11 to 14) laterally to the longitudinal axis (32) of this shift and selector shaft (2) whereas at the shift frame (11 up to 14) for a transmission gear to be engaged (G1, G2, G3, G4, G5, G6, G7, RG) an engagement cam for the engagement of the gear and a disengagement cam for the disengagement of the gear is provided with the engagement cams (16, 17, 34) and the disengagement cams (18, 19, 42) of the shift frame being allocated distance-related (to one another) efficiency circles, either axially and/or radially, that coincide with the rotary levels of the related shift fingers.

2. Shift device according to claim 1, **characterized in that** the cams (16, 17, 34; 18, 19; 42) are primarily aligned in an axle-parallel manner to the longitudinal axis (32) of the shift and selector shaft (2) at the shift frames (11 up to 14).

3. Shift device according to at least one of the preceding claims, **characterized in that** the cams (16, 17, 34; 18, 19, 42) of the shift frames (11 up to 14) are allocated next to one another, generating pairs of items.

4. Shift devices according to at least one of the preceding claims, **characterized in that** the cams (16, 17, 34; 19, 19, 42) mostly point towards one another and feature radially aligned actuation faces (24, 25, 26, 27, 36, 38, 39) for the actuation of the shift fingers (3 up to 10).

5. Shift devices according to claim 4, **characterized in that** the actuation faces (24, 25, 26, 27, 36, 38, 39) at the cams (16, 17, 34; 18, 19; 42) have been designed in such a way that the motion of an engaging/ a meshing shift finger (3 up to 10) of the same shift frame (11 up to 14) is not impacted.

6. Shift devices according to at least one of the preceding claims, **characterized in that**, at the same shift frame (11 up to 14), the distance between the cams (18, 19) of the disengaging cam pairs varies from the distance of the cams (16, 17) of the engaging cam pair.

7. Shift devices according to at least one of the preceding claims, **characterized in that**, at the same shift frame (11 up to 14), the distance center line (31) between two disengaging cams (18, 19) is either symmetric or laterally offset in relation to the distance center line (30) between two engaging cams (16, 17).

8. Shift devices according to at least one of the preceding claims, **characterized in that** the coasting - traction means (20, 21) aligned with the shift frames (11 up to 14) have been designed as bars or sheet metal stamped parts.

9. Shift devices according to at least one of the preceding claims, **characterized in that** the transmission gears (RG, G1, G2, G3, G4, G5, G6, G7) can be sequentially selected and engaged.

10. Shift devices according to at least one of the preceding claims, **characterized in that** the shift and selector shaft (2) can be rotated by means of an actuator (23) around its longitudinal axis (32).

11. Shift devices according to at least one of the preceding claims, **characterized in that** the shift and selector shaft (2) can be axially offset in such a way by means of a driving device (22) that the shift fingers (3 up to 10) can be taken out of an engagement position or can be brought into an engagement position with the cams (16, 17, 34; 18, 19; 42).

12. Shift devices according to at least one of the preceding claims, **characterized in that** through the rotation of the shift and selector shaft (2) by less than 360°, preferably by less than 270°, all shift positions of the transmission can be attained as well as engaging/disengaging the corresponding gears (RG, G1, G2, G3, G4, G5, G6, G7).

13. Shift devices according to at least one of the preceding claims, **characterized in that** the shift and selector shaft (2) in relation to their respective rotation angle and their respective direction of rotation can be offset in such a way, either constantly or partially axially, that one or several finger/s (3 up to 10) are being brought into the actuation position/s of more than one shift frame (11 up to 14).

14. Shift devices according to at least one of the preceding claims, **characterized in that** the shift and selector shaft (2) are made up by several components.

15. Shift devices according to claim 14, **characterized in that** the sub-shafts of the shift and selector shafts (2) are aligned and suspended in an axially parallel, axially serial (back-to-back), or coaxial manner with one another.

16. Shift devices according to claim 14 or 15, **characterized in that** a locking device has been aligned with the shift frame through which the simultaneous engagement of two transmission gears on a wheelset axle of a dual clutch transmission can be prevented.

17. Shift device according to at least one of the preceding claims, **characterized in that** a locking device has been aligned with the shift frame through which the simultaneous engagement of two transmission gears on a wheelset axle of a dual clutch transmission can be prevented.

## Revendications

1. Dispositif de changement de vitesses (1) d'une boîte mécanique à plusieurs rapports, dotée d'un arbre de commande et de sélection (2), sur celui-ci étant disposés des doigts de commande (3 à 10), dotée d'un grand nombre de cadres de commande (11 à 14), dont les orifices (33) sont traversés par l'arbre de commande et de sélection (2), dotée d'au moins un élément de poussée/traction (20, 21) réalisé sur chacun des cadres de commande (11 à 14), ces éléments de poussée/traction étant liés à des moyens d'accouplement, à l'aide desquels des pignons fous de la boîte de vitesses peuvent être liés solidaires en rotation à l'arbre de la boîte de vitesses, sachant qu'une seule rotation de l'arbre de commande et de sélection (2) autour de son axe longitudinal (32) permet de sélectionner et engager chacun des rapports de la boîte de vitesses, **caractérisé en ce que** à l'aide d'au moins un cadre de commande (11 1 à 14) il est possible d'engager et de désengager deux rapports, et cela alternativement l'un par rapport à l'autre, sachant qu'à ce cadre de commande sont associés deux doigts de commande (3 et 4, 5 et 6, 7 et 8, 9 et 10) disposés sur l'arbre de commande et de sélection et que le cadre de commande comporte des cames (16 à 19, 34, 37, 40, 41, 42), celles-ci déplaçant lors d'une rotation de l'arbre de commande et de sélection (2) et en combinaison avec les doigts de commande (3 à 10) le cadre de commande (11 à 14) transversalement par rapport à l'axe longitudinal (32) de cet arbre de commande et de sélection (2), sachant que sur les cadres de commande (11 à 14) sont réalisés - pour un rapport de boîte de vitesses à engager (G1, G2, G3, G4, G5, G6, G7, RG) - une came d'engagement pour l'engagement du rapport et une came de désengagement pour le désengagement du rapport et sachant qu'aux cames d'engagement (16, 17, 34) et aux cames de désengagement (18, 19, 42) du cadre de commande sont associés des rayons d'action mutuellement distants en sens axial et/ou radial et coïncidant avec les plans de rotation des doigts de commande correspondants.

2. Dispositif de changement de vitesses selon la revendication 1, **caractérisé en ce que** les cames (16, 17, 34; 18, 19; 42) sont alignées essentiellement parallèles à l'axe longitudinal (32) de l'arbre de commande et de sélection (2) au niveau des cadres de commande (11 à 14).

3. Dispositif de changement de vitesses selon au moins une des revendications précédentes, **caractérisé en ce que** les cames (16, 17, 34; 18, 19, 42) des cadres de commande (11 à 14) sont juxtaposés par paires.

4. Dispositif de changement de vitesses selon au moins une des revendications précédentes, **caractérisé en ce que** les cames (16, 17, 34; 18, 19, 42) comportent des surfaces d'actionnement (24, 25, 26, 27, 36, 38, 39) essentiellement orientées l'une par rapport à l'autre et radialement pour l'appui des doigts de commande (3 à 10).

5. Dispositif de changement de vitesses selon la revendication 4, **caractérisé en ce que** les surfaces d'actionnement (24, 25, 26, 27, 36, 38, 39) au niveau des cames (16, 17, 34; 18, 19; 42) sont réalisées de façon à ce qu'elles ne perturbent pas la mobilité d'un doigt de commande engagé (3 à 10) du même cadre de commande (11 à 14).

6. Dispositif de changement de vitesses selon au moins une des revendications précédentes, **caractérisé en ce que** sur le même cadre de commande (11 bis 14) la distance entre les cames (18, 19) de la paire de cames de désengagement est différente de la distance des cames (16, 17) de la paire de cames d'engagement.

7. Dispositif de changement de vitesses selon au moins une des revendications précédentes, **caractérisé en ce que** sur le même cadre de commande (11 à 14) la ligne médiane de distance (31) entre deux cames de désengagement (18, 19) est orientée symétriquement ou latéralement décalée par rapport à la ligne médiane de distance (30) entre deux cames d'engagement (16, 17).

8. Dispositif de changement de vitesses selon au moins une des revendications précédentes, **caractérisé en ce que** les moyens de poussée/traction (20, 21) disposés sur les cadres de commande (11 à 14) sont réalisés en tant que tiges ou pièces en tôle estampées.

9. Dispositif de changement de vitesses selon au moins une des revendications précédentes, **caractérisé en ce que** les rapports de la boîte de vitesses (RG, G1, G2, G3, G4, G5, G6, G7) peuvent être sélectionnés et engagés de façon séquentielle.

10. Dispositif de changement de vitesses selon au moins une des revendications précédentes, **caractérisé en ce que** l'arbre de commande et de sélection (2) peut être tourné autour de son axe longitudinal (32) à l'aide d'un actionneur (23).

11. Dispositif de changement de vitesses selon au moins une des revendications précédentes, **caractérisé en ce que** l'arbre de commande et de sélection (2) peut être déplaçé axialement à l'aide d'un dispositif d'entraînement (22), et cela de façon à ce que les doigts de commande (3 à 10) peuvent être déplaçés hors d'une position d'engagement ou vers une position d'engagement par rapport aux cames (16, 17, 34; 18, 19; 42).

12. Dispositif de changement de vitesses selon au moins une des revendications précédentes, **caractérisé en ce que** par rotation de l'arbre de commande et de sélection (2) de moins de 360°, de préférence de moins de 270°, il est possible d'atteindre toutes les positions de commande de la boîte de vitesses et d'engager et de désengager les rapports y associés (RG, G1, G2, G3, G4. G5, G6, G7).

13. Dispositif de changement de vitesses selon au moins une des revendications précédentes, **caractérisé en ce que** l'arbre de commande et de sélection (2) peut être déplaçé constamment ou partiellement en sens axial en fonction de son angle de rotation et de son sens de rotation, et cela de façon à ce que un ou plusieurs doigts de commande (3 à 10) peuvent être amenés en position d'actionnement de plus d'un cadre de commande (11 à 14).

14. Dispositif de changement de vitesses selon au moins une des revendications précédentes, **caractérisé en ce que** l'arbre de commande et de sélection (2) est composé de plusieurs parties.

15. Dispositif de changement de vitesses selon la revendication 14, **caractérisé en ce que** les demi-arbres de l'arbre de l'arbre de commande et de sélection (2) sont disposés et logés parallèles à l'axe, axialement l'un derrière l'autre ou coaxialement l'un par rapport à l'autre.

16. Dispositif de changement de vitesses selon la revendication 14 ou 15, **caractérisé en ce que** sur les cadres de commande est disposé un dispositif de verrouillage, à l'aide duquel il est possible d'éviter l'engagement simultané de deux rapports de la boîte de vitesses sur un arbre à trains d'engrenages d'une transmission à double embrayage.

17. Dispositif de changement de vitesses selon au moins une des revendications précédentes, **caractérisé en ce que** sur les cadres de commande est disposé un dispositif de verrouillage, à l'aide duquel il est possible d'éviter l'engagement simultané de deux rapports de la boîte de vitesses sur un arbre à trains d'engrenages d'une transmission à double embrayage.
